# FASCICULE DE BREVET EUROPEEN

(11) **EP 0 720 280 B1**
(45) Date de publication et mention de la délivrance du brevet: **11.11.1998**
(21) Numéro de dépôt: 95402961.7
(22) Date de dépôt: 28.12.1995
(51) Int. Cl.: H02M 7/48

(54) **Dispositif électronique de conversion de l'énergie électrique et installation en faisant usage**
Elektronische Energieumwandlungsschaltung und diese benutzende Stromversorgungsanlage
Electronic device for electric energy conversion and power supply using the same

(30) Priorité: 29.12.1994 FR 9415864
(43) Date de publication de la demande: 03.07.1996
(73) Titulaire: GEC ALSTHOM TRANSPORT SA, 75116 Paris (FR)
(72) Inventeur: Lavieville Jean-Paul, F-91190 Gif sur Yvette (FR); Carrere, Philippe, F-91460 Marcoussis (FR); Meynard, Thierry, F-31500 Toulouse (FR)
(74) Mandataire: Fournier, Michel

(56) Documents cités:
- FR-A- 2 679 715

## Description

La présente invention concerne les dispositifs électroniques de conversion de l'énergie électrique du type décrit dans la demande de brevet FR - 2 679 715 A1 et une installation d'alimentation en faisant usage.

Le convertisseur décrit dans cette demande de brevet est illustré, à titre d'exemple, par la figure 1 ci-annexée. Il comprend essentiellement, entre une source de tension SE et une source de courant C, une succession de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lcl), de sorte que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte que, en réponse à des signaux de commande de cellules identiques mais décalés dans de temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable.

Dans un tel convertisseur, les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Dans ce qui suit on dénommera convertisseur multiniveaux un convertisseur répondant à la description qui précède.

L'avantage d'un tel convertisseur est que, en fonctionnement normal, lesdits interrupteurs ne supportent chacun qu'une fraction de la tension maximale à laquelle est soumis le convertisseur, c'est-à-dire celle qui correspond à la différence des tensions de charge des deux condensateurs de deux cellules adjacentes. On peut ainsi employer, pour ces interrupteurs, des composants moins chers et/ou plus rapides ; dans ce dernier cas, cela permet de réaliser un convertisseur dont la fréquence de fonctionnement est plus élevée, ce qui présente un grand intérêt pratique.

L'objet de la présente invention est de faire en sorte que lesdits condensateurs acquièrent respectivement lesdites tensions de charge nominales, rapidement, dès que ladite source de tension alimente le convertisseur.

En effet, le principe de fonctionnement du convertisseur est tel que, si la tension de charge nominale d'un condensateur est plus élevée que ce qu'elle devrait être, celui-ci fournit davantage de courant à la source de courant, ce qui tend à ramener sa tension de charge à sa valeur nominale. Toutefois, ce processus est relativement lent, particulièrement lorsque le courant dans la source de courant est faible. Appliqué aux conditions où ladite source de tension, initialement inactive, établit soudain la tension d'alimentation du convertisseur, cela signifie que, durant un laps de temps relativement long, les interrupteurs seraient soumis à des tensions anormalement élevées.

Il importe pourtant que, dans ces conditions comme en fonctionnement normal, les interrupteurs ne soient pas soumis à des tensions excessives, même temporairement, car cela pourrait les endommager.

Cet objectif est atteint, selon l'invention, en ce que le convertisseur comprend des moyens de commande agencés pour évaluer ladite tension de la source de tension et, dès lors qu'elle est inférieure à un seuil déterminé, pour suspendre ledit fonctionnement nominal du convertisseur et agir sur lesdits interrupteurs en sorte que, lorsque ladite tension de la source de tension a une valeur comprise entre zéro et une tension correspondant à la tension de charge nominale du condensateur de tension de charge nominale la moins élevée, elle charge tous les condensateurs du convertisseur, lorsque cette tension de la source de tension dépasse ladite tension de charge nominale la moins élevée, le condensateur nominalement chargé sous cette dernière tension est mis hors circuit, ladite tension de la source de tension continuant de charger les condensateurs de tensions de charge nominales plus élevées, lorsque la tension de la source de tension dépasse la tension de charge nominale de condensateur immédiatement supérieure, le condensateur nominalement chargé sous cette dernière tension est à son tour mis hors circuit, et ainsi de suite, jusqu'à ce que tous les condensateurs du convertisseur soient chargés sous leurs tensions de charge nominales respectives, après quoi lesdits moyens de commande instaurent ledit fonctionnement nominal du convertisseur.

Dans une forme de réalisation du convertisseur, lesdits moyens de commande agissent sur lesdits interrupteurs en sorte qu'initialement les deux interrupteurs de toutes les cellules soient fermés ensemble, sauf ceux de la première cellule qui sont dans un autre état, après quoi, au fur et à mesure de l'élévation de ladite tension de la source de tension, les deux interrupteurs des cellules successives suivantes sont mis dans ledit autre état, cellule après cellule.

L'invention vise également une installation faisant usage d'un tel convertisseur et qui est aménagée, autant que de besoin, pour que ledit établissement de la tension de la source de tension ait une progressivité appropriée au convertisseur employé.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, déjà décrite, le schéma de principe d'un convertisseur multiniveaux connu
- la figure 2, le schéma de principe de moyens de commande d'un convertisseur multiniveaux du type de la figure 1, agencés pour permettre la mise en oeuvre de l'invention,
- la figure 3, le schéma de principe de moyens d'évaluation de tension de charge de condensateur utilisables dans le dispositif de la figure 4.

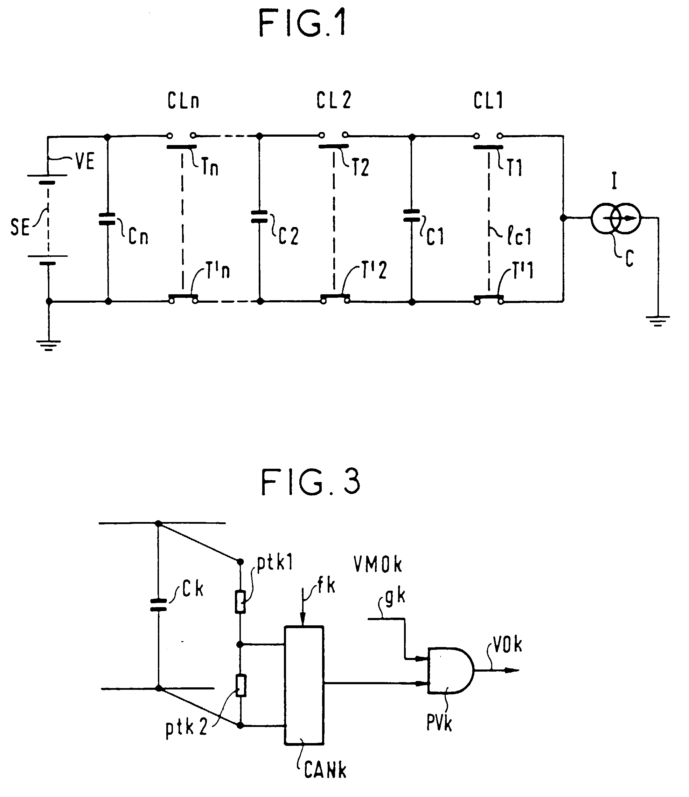

On ne reviendra pas sur la description d'un convertisseur multiniveaux. Le schéma de la figure 1 correspond à un convertisseur du type décrit dans le document de brevet FR - 2 697 715 A1 auquel le lecteur est renvoyé pour de plus amples détails.

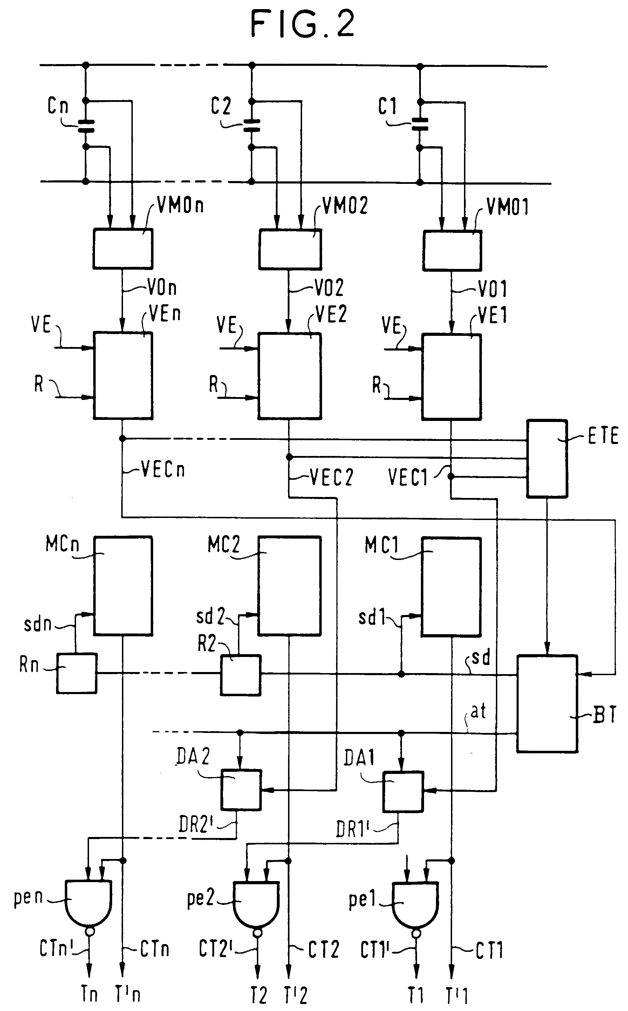

La figure 2 ne représente du convertisseur de la figure 1, que les condensateurs C1, C2..., Cn.

A chacun de ces condensateurs est associé, selon l'invention, un dispositif d'évaluation VMO1, VMO2..., VMOn permettant d'évaluer la tension aux bornes de chacun des condensateurs. A cette fin, ce dispositif est couplé aux deux bornes du condensateur. Il fournit un signal d'évaluation VO1, VO2..., VOn exprimant la tension existant aux bornes du condensateur.

En se reportant à la figure 3, ce dispositif d'évaluation sera composé, selon une forme de mise en oeuvre, d'impédances ptk1 et ptk2, connectées en série entre les bornes du condensateur Ck, et fournissant une fraction déterminée de la tension aux bornes de ce condensateur à un convertisseur analogique-numérique CAN fournissant à chaque impulsion fk une valeur numérique de tension lue par un circuit de porte PVk déclenché par un signal gk. Les signaux fk et gk seront avantageusement produits par une base de temps BT (figure 2).

A chacun des condensateurs est également associé, selon l'invention, un dispositif de constation d'écart VE1, VE2..., VEn permettant de constater un écart éventuel entre la tension de charge observée, qu'il reçoit du dispositif d'évaluation correspondant, et la tension de charge nominale de ce condensateur. Ce dispositif de constatation d'écart calcule lui-même la tension de charge nominale de ce condensateur, qui est la fraction 1/n, n étant le nombre d'étages du convertisseur, de la tension VE de la source de tension SE, multipliée par le rang R de l'étage. Ce dispositif reçoit donc les valeurs VE et R, la valeur n, constante de l'ensemble du convertisseur étant câblée dans chaque dispositif (la valeur R, constante de chaque étage, pourrait d'ailleurs être également câblée). Il en dérive la tension de charge nominale VE.R/n et la compare à la tension de charge évaluée pour fournir un signal d'écart VEC1, VEC2..., VECn, caractérisant la différence entre ces deux tensions. Ce signal d'écart peut être un simple signal logique (à deux bits) caractérisant seulement la présence d'un écart et son signe. Avantageusement, pour des raisons qui apparaîtront plus loin, un signal d'écart n'est fourni que si l'écart de charge du condensateur dépasse un seuil prédéterminé, câblé dans le dispositif de constatation d'écart.

Les moyens de commande de la figure 2 comprennent en outre des modules de commande MC1, MC2..., MCn fonctionnant en réponse à des signaux de déclenchement sd1, sd2..., sdn. A chaque période de convertisseur, la base de temps BT produit un signal sd, lequel fournit directement le signal sd1 et, grâce aux unités de retard R2..., Rn, des signaux décalés dans le temps sd2..., sdn. Les modules de commande MC1, MC2..., MCn ont essentiellement pour fonction de produire, au cours de chaque période de convertisseur, une impulsion de commande portant dans un état actif des signaux CT1, CT2..., CTn, commandant les interrupteurs du convertisseur. La durée nominale de cette impulsion est dans chaque cas principalement déterminée par la valeur VE de la tension fournie par la source de tension et par le niveau de la tension à fournir à la source de courant. On ne décrira pas plus avant cet aspect du fonctionnement du convertisseur qui sort du domaine de la présente invention.

Ces impulsions de commande au niveau actif sont adressées chacune directement aux interrupteurs T'1, T'2..., T'n, pour les bloquer, et sont fournies aux portes NOR pel, pe2..., pen, lesquelles, quels que soient les niveaux de leur autre entrée, fournissent alors chacune le niveau opposé, dit inactif, pour rendre alors conducteurs les interrupteurs T1, T2..., Tn.

Durant le fonctionnement normal du convertisseur, les états des deux interrupteurs de chaque paire T1, T'1 ; T2, T'2...; Tn, T'n sont donc toujours opposées, comme indiqué précédemment.

En outre, selon l'invention, le convertisseur comprend des moyens de commande, essentiellement situés dans la base de temps BT, selon l'exemple de réalisation de la figure 2, recevant continuellement une évaluation de ladite tension de la source de tension du convertisseur, sous la forme du signal d'écart VECn, et, dès lors que cette tension est inférieure à un seuil déterminé, suspendant ledit fonctionnement nominal du convertisseur.

En effet, puisque le signal VECn est relatif à la tension de charge du condensateur Cn, il est en même temps relatif à la tension de la source de tension. Dans la pratique, ou cette tension est présente à sa valeur nominale et le fonctionnement nominale du convertisseur doit être instauré, ou cette tension n'est pas présente à sa valeur nominale, sa valeur étant telle qu'au retour à la normale, il pourrait se produire, sans l'invention, un dépassement de la tension de service des interrupteurs, et alors le fonctionnement normal du convertisseur ne doit pas se poursuivre ; cela apparaîtra plus clairement par la suite.

Donc, la base de temps BT, constatant que la tension de la source de tension est insuffisante, supprime tout signal sd et, à la place, fournit un signal continu at.

A cause de l'absence de signal sd, les signaux CT1, CT2..., CTn demeurent dans l'état inactif qui rend conducteurs les interrupteurs T'1, T'2..., T'n.

Le signal at valide les dispositifs d'attente DA1, DA2..., DAn-1 (non représenté). Chacun d'eux observe le signal d'écart correspondant VEC1, VEC2... et, tant que la tension de charge moyenne du condensateur correspondant n'est pas telle que le signal d'écart s'annule, fournit un signal de commande de charge DR1',DR2'... à la porte pe2..., pen de la cellule de commutation de rang immédiatement supérieur.

Il en résulte que, pour chaque cellule, lorsqu'aucun condensateur n'est suffisamment chargé, alors que l'interrupteur T'2...T'n est déjà fermé, l'interrupteur T2..., Tn l'est aussi. En se reportant à la figure 1, on voit clairement que tous les condensateurs sont ainsi connectés en parallèle aux bornes de la source de tension. Dès lors que la tension de la source de tension est établie, tous les condensateurs se chargent donc en parallèle.

Ensuite, lorsque le condensateur C1 atteint sa charge nominale, le signal d'écart VEC1 disparaît, le dispositif DA1 supprime le signal de commande de charge DR'1 et l'interrupteur T2 se bloque, ce qui interrompt la charge du condensateur C1, tandis qu'elle se poursuit pour les autres condensateurs.

Lorsque le condensateur C2 est à son tour suffisamment chargé, le signal d'écart correspondant VEC2 s'annule et le dispositif DA2 supprime le signal DR2', ce qui bloque un interrupteur T3 non représenté, et ainsi de suite, jusqu'à ce que le condensateur Cn-1 non représenté soit chargé, ce qui bloque l'interrupteur Tn.

Enfin, lorsque la charge du condensateur Cn est complète, la base de temps, voyant le signal d'écart VECn s'annuler, supprime le signal continu at et instaure le fonctionnement nominal du convertisseur en produisant un signal périodique sd.

Il est clair qu'une variante de ce qui précède consisterait à comparer non pas les tensions de charge observées des condensateurs, individuellement, chacune à la tension de charge nominale de ce condensateur, mais seulement la tension de la source de tension aux diverses tensions de charge nominales ; cette variante serait plus économique.

Bien entendu, ce qui précède est basé sur la supposition que l'établissement de la tension de la source de tension est suffisamment progressif pour permettre le fonctionnement décrit.

Cette supposition sera usuellement vérifiée, car elle comprend presque toujours un filtre qui limite la pente d'établissement du courant. Il peut aussi s'agir d'un réseau d'alimentation en tension alternative et les constantes de temps qu'on y rencontre sont généralement de l'ordre du quart de période, soit 5 ms à 50 Hz, durée très supérieure à la période de fonctionnement du convertisseur.

Enfin, en cas de besoin, selon l'invention, on ajoutera des moyens à constante de temps tels que ledit établissement de la tension de la source de tension ait une progressivité appropriée au convertisseur employé.

Par ailleurs, il est souhaitable que l'évaluation de la tension de charge des condensateurs du convertisseur se fasse aussi rapidement que possible. La solution décrite en rapport avec la figure 3, qui a le mérite de permettre un traitement numérique, n'est pas optimale à cet égard. Une variante analogique, où la tension issue du pont diviseur de tension est comparée à une tension de référence, pour actionner une bascule électronique, peut être préférée.

Il faut encore mentionner que, compte tenu des dérives dans les paramètres des différents circuit, il est souhaitable que la comparaison entre la tension de charge de condensateur observée et la référence correspondante inclue une marge d'erreur, sous la forme d'un seuil, en dessous duquel ledit signal d'écart n'est pas fourni.

Il est bien évident que les descriptions qui précèdent n'ont été données qu'à titre d'exemple limitatif et que les valeurs numériques, notamment, peuvent changer avec chaque application.

## Revendications

1. Convertisseur multiniveaux comprenant notamment, entre une source de tension (SE) et une source de courant (C), une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs contituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, connecté entre les deux pôles de la paire de pôles aval de la cellule, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à un signal de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse à des signaux de commande de cellules identiques mais décalés dans de temps d'une fraction de ladite période, les interrupteurs des cellules successives aient respectivement le même fonctionnement, mais décalé dans le temps de ladite fraction de période, les condensateurs successifs (C1, C2..., Cn) ayant nominalement des tensions de charge respectivement croissantes, la tension de charge nominale du condensateur de chacune desdites cellules étant égale au produit d'une tension (VE) issue de ladite source de tension (SE), par l'inverse du nombre de cellules et par le rang de la cellule, caractérisé en ce qu'il comprend des moyens de commande (BT, DA1..., DAn, pe2..., pen) agencés pour évaluer ladite tension de la source de tension du convertisseur (VECn) et, dès lors qu'elle est inférieure à un seuil déterminé, pour suspendre ledit fonctionnement nominal du convertisseur (sd) et agir sur lesdits interrupteurs (T1, T'1 ; T2, T'2...; Tn, T'n) en sorte que, lorsque ladite tension (VE) de la source de tension (SE) a une valeur comprise entre zéro et une dite tension de charge nominale la moins élevée, elle charge tous les condensateurs du convertisseur, lorsque cette tension de la source de tension dépasse ladite tension de charge nominale la moins élevée, le condensateur (C1) nominalement chargé sous cette dernière tension est mis hors circuit, ladite tension de la source de tension continuant de charger les condensateurs (C2..., Cn) demandant des tensions de charge nominales plus élevées, lorsque la tension de la source de tension dépasse la tension de charge nominale immédiatement supérieure, le condensateur (C2) nominalement chargé sous cette dernière tension est à son tour mis hors circuit, tandis que la tension de la source de tension continue de charger les autres condensateurs, et ainsi de suite, jusqu'à ce que tous les condensateurs du convertisseur soient chargés sous leurs tensions de charge nominales respectives, après quoi lesdits moyens de commande instaurent ledit fonctionnement nominal du convertisseur.

2. Convertisseur conforme à la revendication 1, caractérisé en ce que lesdits moyens de commande (BT, DA2..., DAn, pe2..., pen) agissent sur lesdits interrupteurs afin que, pour une tension de la source de tension croissante à partir de zéro, les deux interrupteurs de toutes les cellules (T1, T'1 ; T2, T'2...; Tn, T'n) soient initialement fermés ensemble, sauf ceux de la première cellule (T1, T'1) qui sont dans un autre état tel que la tension fournie à ladite charge soit nulle, après quoi, au fur et à mesure de l'élévation de ladite tension de la source de tension, les deux interrupteurs des cellules successives suivantes (T2, T'2..., Tn, T'n) sont mis dans ledit autre état, cellule après cellule.

3. Installation faisant usage d'un convertisseur conforme à l'une quelconque des revendications précédentes, caractérisé en ce qu'il est aménagée, autant que de besoin, pour que ledit établissement de la tension de la source de tension ait une progressivité appropriée au convertisseur employé.

## Patentansprüche

1. Mehrstufenwandler, der insbesondere zwischen einer Spannungsquelle (SE) und einer Stromquelle (C) eine Folge von steuerbaren Stromwendezellen (CL1, CL2..., CLn) umfaßt, wobei jede zwei Schalter (T1, T'1; T2, T'2...; Tn, T'n) aufweist, wobei ein Pol jedes der beiden Schalter ein stromaufwärtiges Polpaar und der andere Pol jedes der Schalter ein stromabwärtiges Polpaar bildet, wobei das stromabwärtige Polpaar einer stromaufwärtigen Zelle mit dem stromaufwärtigen Polpaar einer stromabwärtigen Zelle verbunden ist und das stromaufwärtige Polpaar einer ersten Zelle (CL1) mit der Stromquelle (C) verbunden ist, während das stromabwärtige Polpaar einer letzten Zelle (CLn) mit der Spannungsquelle (SE) verbunden ist, wobei dieser Wandler noch einen Kondensator (C1, C2..., Cn) für jede Zelle, nur daß der der letzten weggelassen werden kann, wenn die Spannungsquelle (SE), zwischen den beiden Polen des stromabwärtigen Polpaares der Zelle angeschlossen, fähig ist, dabei die Rolle zu spielen, sowie Steuermittel umfaßt, die die nominale Funktion des Wandlers regeln, indem sie auf die Schalter der aufeinanderfolgenden Zellen einwirken, so daß die beiden Schalter derselben Zelle sich immer entsprechend in den entgegengesetzten Leitungszuständen befinden, so daß sich einer der beiden Schalter derselben Zelle in Antwort auf ein Zellensteuersignal (CT1, CT2..., CTn), das von den Steuermitteln geliefert wird, während einer zyklisch wiederholten Periode nacheinander in einem ersten Leitungszustand, dann in einem zweiten Leitungszustand befindet und daß die Schalter der aufeinanderfolgenden Zellen in Antwort auf Zellensteuersignale, die gleich aber in der Zeit um einen Bruchteil der Periode versetzt sind, entsprechend die gleiche Funktion haben, aber in der Zeit um den Periodenbruchteil versetzt, wobei die aufeinanderfolgenden Kondensatoren (C1, C2..., Cn) nominal jeweils zunehmende Ladungsspannungen aufweisen, wobei die nominale Ladungsspannung des Kondensators jeder der Zellen gleich dem Produkt einer von der Spannungsquelle (SE) stammenden Spannung (VE) mit dem Inversen der Anzahl der Zellen und dem Rang der Zelle ist, dadurch gekennzeichnet, daß er Steuermittel (BT, DA1..., DAn, pe2..., pen) umfaßt, die so angeordnet sind, daß sie die Spannung (VECn) der Spannungsquelle des Wandlers bestimmen und, sobald sie geringer als eine bestimmte Schwelle ist, die nominale Funktion (sd) des Wandlers unterbrechen und auf die Schalter (T1, T'1; T2, T'2...; Tn, T'n) einwirken, so daß wenn die Spannung (VE) der Spannungsquelle (SE) einen Wert zwischen Null und einer niedrigsten Ladungsspannung hat, sie alle Kondensatoren des Wandlers auflädt, wenn diese Spannung der Spannungsquelle die niedrigste nominale Ladungsspannung übersteigt, der unter dieser letzteren Spannung nominal geladene Kondensator (C1) außerhalb der Schaltung gesetzt wird, wobei die Spannung der Spannungsquelle die Kondensatoren (C2..., Cn), die höhere nominale Ladungsspannungen erfordern, weiter auflädt, wenn die Spannung der Spannungsquelle die unmittelbar höhere nominale Ladungsspannung übersteigt, der unter dieser letzteren Spannung nominal geladene Kondensator (C2) wiederum außerhalb der Schaltung gesetzt wird, während die Spannung der Spannungsquelle die anderen Kondensatoren weiter auflädt, und so weiter, bis alle Kondensatoren des Wandlers unter ihren jeweiligen nominalen Ladungsspannungen geladen sind, wonach die Steuermittel die nominale Funktion des Wandlers errichten.

2. Wandler nach Anspruch 1, dadurch gekennzeichnet, daß die Steuermittel (BT, DA2..., DAn, pe2..., pen) auf die Schalter einwirken, damit für eine von Null aus zunehmende Spannung der Spannungsquelle die beiden Schalter (T1, T'1; T2, T'2...; Tn, T'n) aller Zellen anfangs zugleich geschlossen sind, außer denjenigen (T1, T'1) der ersten Zelle, die sich in einem anderen Zustand befinden, so daß die bei der Ladung gelieferte Spannung Null ist, wonach entsprechend der Erhöhung der Spannung der Spannungsquelle die beiden Schalter (T2, T'2..., Tn, T'n) der nachfolgenden aufeinanderfolgenden Zellen Zelle für Zelle in den anderen Zustand versetzt werden.

3. Anlage, die von einem Wandler nach einem der vorhergehenden Ansprüche Gebrauch macht, dadurch gekennzeichnet, daß sie bei Bedarf so angeordnet ist, daß der Aufbau der Spannung der Spannungsquelle eine für den eingesetzten Wandler geeignete Progressivität aufweist.

## Claims

1. A multilevel converter comprising, in particular, between a voltage source (SE) and a current source (C). a succession of controllable switching cells (CL1, CL2, ..., CLn), each having two switches (T1, T'1: T2. T'2; ...: Tn, T'n), with one pole of each of the two switches forming part of a pair of upstream poles and with the other pole of each of the switches forming one of a pair of downstream poles, the pair of downstream poles of an upstream cell being connected to the pair of upstream poles of a downstream cell, and the pair of upstream poles of a first cell (CL1) being connected to said current source (C) while the pair of downstream poles of a last cell (CLn) is connected to said voltage source (SE), the converter further comprising a capacitor (C1, C2, ..., Cn) for each cell, except that the capacitor of the last cell may be omitted when said voltage source (SE) is suitable for performing the same role, each capacitor being connected between the two poles constituting the pair of downstream poles of the corresponding cell, the converter also comprising control means governing the nominal operation of the converter by acting on the switches of successive cells in such a manner that the two switches of any given cell are always in respective opposite conduction states, such that in response to a cell control signal (CT1, CT2, ..., CTn) provided by said control means, one of the two switches in a given cell is successively in a first conduction state and then in a second conduction state during a cyclically repeated period, and such that in response to cell control signals that are identical but offset in time by a fraction of said period the switches of successive cells operate respectively in the same manner but offset in time by said fraction of a period. the successive capacitors (C1, C2, ..., Cn) having respective increasing nominal charge voltages, the nominal charge voltage of the capacitor in each of said cells being equal to the product of a voltage (VE) from said voltage source (SE) multiplied by the reciprocal of the number of cells and by the rank of the cell, the converter being characterized in that it comprises control means (BT, DA1, ..., DAn, pe2, ..., pen) organized to evaluate said voltage of the voltage source of the converter (VECn) and as soon as it is less than a determined threshold, to suspend said nominal operation of the converter (sd) and to act on said switches (T1, T'1: T2, T'2, ...; Tn, T'n) in such a manner that while said voltage (VE) of the voltage source (SE) has a value lying between zero and a lowest one of said nominal charge voltages, it charges all of the capacitors of the converter, while said voltage of the voltage source exceeds said lowest nominal charge voltage the capacitor (C1) nominally charged to said voltage is taken out of circuit and said voltage of the voltage source continues to charge the capacitors (C2, ..., Cn) requiring higher nominal charge voltages, while the voltage of the voltage source exceeds the immediately higher nominal charge voltage the capacitor (C2) nominally charged to said voltage is in turn taken out of circuit, with the voltage of the voltage source continuing to charge the other capacitors. and so on, until all of the capacitors of the converter are charged to their respective nominal charge voltages, after which said control means establish said nominal operation of the converter.

2. A converter according to claim 1, characterized in that said control means (BT, DA2, ..., DAn, pe2, ..., pen) act on said switches so that for a voltage of the voltage source that is increasing from zero, both switches are initially closed simultaneously in all of the cells (T1, T'1; T2, T'2; ...; Tn, T'n), with the exception of the switches of the first cell (T1, T'1) which are in another state such that the voltage delivered to said load is zero, after which, as said voltage of the voltage source rises, the pairs of switches of successive following cells (T2, T'2; ...; Tn, T'n) are put into said other state, cell after cell.

3. An installation making use of a converter according to either preceding claim, characterized in that it is organized. where necessary, so that said establishment of the voltage of the voltage source takes place progressively in a manner appropriate to the converter used.
